# EUROPEAN PATENT SPECIFICATION

(11) **EP 2 682 439 B1**
(45) Date of publication and mention of the grant of the patent: **26.08.2015**
(21) Application number: 12752127.6
(22) Date of filing: 27.02.2012
(51) Int. Cl.: C09D 183/16, B32B 27/00, C08G 77/62, C09D 1/00, C09D 7/12, G02B 1/11

(54) **COMPOSITION FOR FORMING LOW-REFRACTIVE-INDEX FILM, METHOD OF FORMING LOW-REFRACTIVE-INDEX FILM, AND LOW-REFRACTIVE-INDEX FILM AND ANTIREFLECTIVE FILM BOTH FORMED BY THE FORMATION METHOD**
ZUSAMMENSETZUNG ZUR BILDUNG EINES FILMS MIT GERINGEM BRECHUNGSINDEX, VERFAHREN ZUR BILDUNG EINES FILMS MIT GERINGEM BRECHUNGSINDEX SOWIE FILM MIT GERINGEM BRECHUNGSINDEX UND ANTIREFLEXIONSFILM, BEIDE IN DIESEM VERFAHREN GEBILDET
COMPOSITION POUR LA FORMATION DE FILM DE FAIBLE INDICE DE RÉFRACTION, PROCÉDÉ DE FORMATION DE FILM DE FAIBLE INDICE DE RÉFRACTION ET FILM DE FAIBLE INDICE DE RÉFRACTION ET FILM ANTIREFLET TOUS DEUX FORMÉS PAR LE PROCÉDÉ DE FORMATION

(30) Priority: 01.03.2011 JP 2011043904
(43) Date of publication of application: 08.01.2014
(73) Proprietor: AZ Electronic Materials IP (Japan) K.K., Tokyo 113-0021 (JP)
(72) Inventor: OZAKI Yuki, Kakegawa-shi Shizuoka 437-1412 (JP)
(74) Representative: Rippel, Hans Christoph
(86) International application number: PCT/JP2012/054705
(87) International publication number: WO 2012/117990

(56) References cited:
- WO-A1-2006/016672
- WO-A2-2009/129967
- JP-A- 6 240 208
- JP-A- H09 157 528
- JP-A- 2000 229 384
- JP-A- 2004 196 993
- JP-A- 2004 325 579
- JP-A- 2004 532 318
- JP-A- 2008 531 773
- JP-A- 2010 180 301
- US-A1- 2009 098 300

## Description

### TECHNICAL FIELD

The present invention relates to a composition for forming a low refractive index film, more specifically, to a composition for forming a low refractive index film which is used for providing an antireflective function to a display device of a cell phone, apersonal computer, atelevision, and a touch panel and an optical component of a camera, a copying machine, a facsimile machine, a laser beam printer and the like. The present invention also relates to a method for forming a low refractive index film formed by the composition and a low refractive index film and an antireflective film both formed by the method.

### BACKGROUND ART

In order to inhibit reflection or glare of light from outside, an antireflective film is usually formed on a display surface of a display device such as a liquid crystal display or an EL display. The antireflective film is also formed on an optical component of a camera, a copying machine, a facsimile machine, a laserbeamprinter, glasses and the like, if necessary.

As antireflection utilizes an optical interference action, if a refractive index of a firm formed is sufficiently lower than that of a substrate, a low reflection can be given theoretically by using a single layer coating as derived from Fresnel's formulae. However, in actuary fact, an antireflective film is generally formed by a multilayer film having different refractive indexes (a high refractive index layer and a low refractive index layer) as the range of choices of low refractive indexmaterials which can attain antireflection in a single layer coating is narrow,.

Various materials are known as a material for forming the low refractive index layer of the multilayer antireflective film which includes the high refractive index layer and the low J refractive index layer. As examples using polysilazane as such a material, there are known a method of making a refractive index to a lower refractive index (1.40 to 1.46) than a refractive index (1.46) of a silica, which is formed by curing of unsubstituted polysilazane, by using polysilazane, a part of hydrogen atoms of which are substituted by fluorine-containing alkyl groups such as a perfluoroalkyl group (see Patent Document 1) and a method of dispersing fine particles of magnesium fluoride or magnesium oxide in a solution containing perhydropolysilazane (see Patent Document 2).

However, in the case where a film having a refractive index of about 1.40 to about 1.46 is used as an antireflective film, it is necessary to previously form a high refractive index layer as a lower layer. This method, therefore, has a defect that complicated production steps for forming an antireflective film are needed. On the other hand, in the method for forming a low refractive index film by containing low refractive index fine particles such as magnesium fluoride particles, it is necessary to uniformly disperse a lot of fine particles in the film and maintain them stably. The method has also a problem that transparency of the film is lose by dispersion of the fine particles. Furthermore, in recent years, use of starting materials which are environmentally friendly is increasingly required. Use of the polysilazane including the fluorine-containing compound has a fear for influences on the environment.

### CITATION LIST

### PATENT DOCUMENTS

Patent document 1: JP 4374687 B
Patent document 2: JP 2006-259096 A

JP-A-2004325579 describes a method for preparing an anti-reflection base material comprising a cured layer (A), an intermediate cured layer (B) and a top cured layer (C). The cured layer (B) comprises a composition containing fine particles and a mixture of organic polysilazane and perhydropolysilazane in a mass ratio of 3/7-9/1 with a refractive index of 1.55 or higher. The resulting coatings formed have good anti-reflection properties.

US-A-2009098300 relates to a protective coating for preventing scale formation and corrosion on metal comprising a perhydropolysilazane, a solvent, a catalyst and optionally a organopolysilazane as a co-binder. The resulting coatings have no anti-reflective properties.

WO-A-2009129967 describes a polysilazane-containing coatings for reducing the reflection of transparent coatings on solar cells. The coatings have a refractive index of above 0.40 and are composed of only one polysilazane compound and not a blend of organic and inorganic polysilazanes.

### DISCLOSURE OF THE INVENTION

### PROBLEMS TO BE SOLVED BY THE INVENTION

The present invention has been made based on the circumstances described above and aims at providing a composition for forming a low refractive index film which exhibits an excellent antireflective function even when applied in a single layer, can moreover improve an antireflection effect by previously forming a high refractive index layer in a lower layer, and does not influence the environment.

Further, another object of the present invention is to provide a method for forming a low refractive index film using the composition for forming a low-refractive index filmdescribed above, and a low refractive index film and an antireflective film both formed by the method.

### MEANS FOR SOLVING THE PROBLEMS

As a result of intensive studies and investigations, the inventors have found that when a solution containing an inorganic polysilazane and at least one organic polymer selected from a silazane-containing organic polymer, a siloxazane-containing organic polymer, and a ureasilazane-containing organic polymer in a specific ratio is applied on a substrate, a low refractive index film, which falls remarkably below peculiar refractive indexes to compounds obtained by transforming each of the inorganic polysilazane and the organic polymer, can be obtained. As the resulting film has a very small refractive index, it can form an excellent antireflective film even when used as a single layer and is very useful as an antireflective film. The present invention is accomplished based on the findings.

The present invention, therefore, relates to the use of a composition for forming a low refractive index film, and an antireflective film which is formed by applying the composition on a substrate.
(1) The use of a composition comprising (A) an inorganic polysilazane and (B) at least one organic polymer selected from a silazane-containing organic polymer, a siloxazane-containing organic polymer, and a ureasilazane-containing organic polymer, wherein the ratio of (A) : (B) is from 40 : 60 to 17 : 83 by weight for forming a low refractive index film having a refractive index of 1,30 to 1,40.
(2) The use according to item (1) above, wherein the organic polymer has at least one organic group selected from an alkyl group, an alkenyl group, a cycloalkyl group, an aryl group, an alkylsilyl group, an alkylamino group, an alkoxy group, and a group represented by the formula (I): 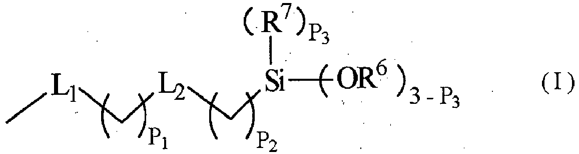 wherein L₁ bonds to Si of the organic polymer; L₁ and L₂ are each independently -CH₂-, -NR⁵- in which R⁵ is a hydrogen atom or a C₁ - C₄ hydrocarbon group, -O-, -S- or -OC (=O)- in which an oxygen atom bonds to Si, but L₂ may be absent; R⁶ and R⁷ are each independently a hydrogen atom, an alkyl group, an alkenyl group, a cycloalkyl group or an aryl group; P₁ and P₂ are each independently an integer of 0 to 4; and P₃ is an integer of 0 to 3.
(3) The use according to item (2) above, wherein the silazane-containing organic polymer is a silazane-containing organic polymer represented by the formula (II): 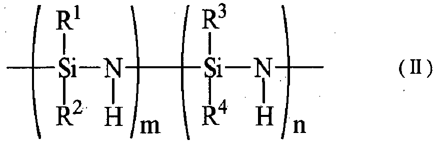 wherein R¹ is a group represented by the formula (I) described above; R², R³, and R⁴ are each independently a hydrogen atom, an alkyl group, an alkenyl group, a cycloalkyl group, an aryl group, an alkylsilyl group, an alkylamino group or an alkoxy group; and m and n show a molar ratio of the structure and m : n is from 50 : 50 to 1 : 99.
(4) The use according to any one of items (1) to (3) above, which further comprises a solvent.
(5) The use according to any one of items (1) to (4) above, which further comprises a catalyst.
(8) An antireflective film comprising a low refractive index film formed by applying a composition for forming a low refractive index according to claim 4 or 5 onto a substrate and transforming the composition for forming a low refractive index film

### ADVANTAGEOUS EFFECT OF THE INVENTION

The film formed using the composition for forming a low refractive index film of the present invention has a low refractive index and it functions as an antireflective film even when applied in a single layer. When it is used in a single layer, accordingly, the production steps of the antireflective film can be simplified. On the other hand, when the film of the present invention is used as an upper layer of a multilayer film structure in which a high refractive index layer has been previously formed as a lower layer, a film having an especially excellent antireflection effect compared with conventional films can be obtained.

In addition, the composition for forming a low refractive index film of the present invention does not give a bad influence on the environment because no fluorine-containing compound is used in the organic polymer. Furthermore, it is not necessary to be constrained by the solubility and dispersibility of the film-forming composition and a low refractive index film having an excellent transparency can be easily formed, because it is not necessary to disperse low refractive index fine particles.

### BRIEF EXPLANATION OF DRAWING

Fig. 1 is a substitute photograph for a drawing and is a SEMphotograph of a cross-section of the film obtained in Example 1.
Fig. 2 is a substitute photograph for a drawing and is a SEM photograph of a cross-section of the film obtained in Comparative Example 1.
Fig. 3 is a substitute photograph for a drawing and a SEM photograph of a cross-section of the film obtained in Comparative Example 2.

### MODE FOR CARRYING OUT THE INVENTION

The composition for forming a low refractive index film (which may be sometimes referred to as a "composition"), the method for forming a low refractive index film, and the low refractive index film and the antireflective film which are formed by the method of the present invention will be explained in further detail below.

As described above, the composition of the present invention is characterized by comprising an inorganic polysilazane and at least one organic polymer (hereinafter which may be sometimes simply referred to as an "organic polymer") selected from a silazane-containing organic polymer (hereinafter which may be sometimes referred to as an "organic polysilazane"), a siloxazane-containing organic polymer (hereinafter which may be sometimes referred to as an "organic polysiloxazane"), and a ureasilazane-containing organic polymer (hereinafter which may be referred to as an "organic polyureasilazane" in a specific ratio. Hereinafter, the inorganic polysilazane, the organic polymer, and the solvent which are used in the composition of the present invention, and the forming method thereof will be explained in detail in order.

### (I) Inorganic Polysilazane

First, an inorganic polysilazane used in the present invention will be explained.

The inorganic polysilazane used in the present invention is not particularly limited and it can be arbitrarily selected from conventionally known ones so long as the effects of the invention are not impaired by use thereof. For example, there can be exemplified a compound soluble in a solvent, which has repeating units represented by the formula (III):

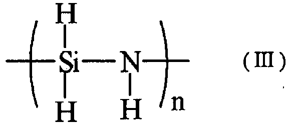

As a method for producing the inorganic polysilazane soluble in a solvent, which has the repeating units represented by the formula (III) described above, any method including conventionally known methods can be adopted. As one example of such a method, for example, there can be raised a method in which a dihalosilane represented by the formula: SiH₂X₂ wherein X is a halogen atom is reacted with a base to form an adduct of dihalosilane and then the adduct of dihalosilane is reacted with ammonia to synthesize it. Halosilanes are generally acidic and are able to form an adduct by reaction with a base. The formation speed of this adduct and the stability as an adduct depend on the strength of the acidity of the halosilane, the strength of the basicity of the basic substance, the steric factor, and the like. Therefore, an adduct which is stable and capable of easily producing an inorganic polysilazane by the reaction with ammonia may be formed by adequately selecting the kinds of the halosilane and the base. The stability of the adduct in this case does not necessarily mean a stability in which the resulting product can be isolated as an adduct. It encompasses all cases including not only a case where the resulting product can stably exist in a solvent but also a case where it substantially functions as a reaction intermediate.

As the halosilane, it is preferred to select dihalosilanes represented by the formula: SiH₂X₂ wherein X is F, Cl, Br or I in terms of the handling and reactivity thereof. Furthermore, it is particularly preferred to use dichlorosilane in terms of the reactivity and the price of starting materials.

The base used for forming the adduct may be bases which do not cause reactions other than the reaction forming an adduct with the halosilane. Preferable examples thereof may include Lewis bases, tertiary amines such as trialkylamines, pyridine, picoline and their derivatives, secondary amines having a sterically hindered group, phosphine, arsine and their derivatives, and the like, for example, trimethyl phosphine, dimethylethyl phosphine, methyldiethyl phosphine, trimethyl arsine, trimethyl stibine, trimethyl amine, triethyl amine, thiophene, furan, dioxane, selenophene, and the like. Pyridine and picoline are particularly preferable in terms of the handling and economy. The amount of the base used is not required to be strict, and it is enough that the base including the amine in the adduct exists in a stoichiometric amount or more to the silane, i.e., a ratio of amine : silane is 2 or more : 1. In addition, the formation of the adduct is performed in a solvent.

In a synthesis of the inorganic polysilazane via the adduct, the inorganic polysilazane is formed by reacting the adduct described above with ammonia in an unreactive solvent. In such a case, the amount of ammonia may be an amount more than that of the silane. Further, with respect to the reaction conditions thereof, the reaction temperature may be usually from -78°C to 100°C, preferably from -40°C to 80 °C but the reaction time and the reaction pressure are not particularly limited. The polymerization reaction of the inorganic polysilazane may be preferably performed in an inert gas atmosphere. Nitrogen gas and argon gas are preferred as the inert gas.

As the inorganic polysilazane, for example, perhydropolysilazanes having linear parts and cyclic parts in its molecule are known. The perhydropolysilazane can be produced by, for example, a method described in JP 63-16325 B, a method reported in D. Seyferth et al., Communication of Am. Cer. Soc., C-13, January 1983, or a method described in JP 11-116815 A, and the like. It has basically linear parts and cyclic parts in its molecule and can be represented by following chemical formulae:

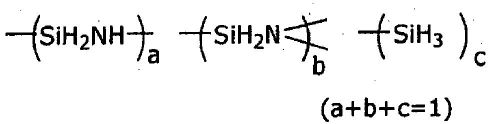

JP 63-16325 B describes perhydropolysilazanes having a molecular weight of 690 to 2,000, 3 to 10 SiH₃ groups in one molecule, and an elemental ratio by a chemical analysis of 59 to 61 % by weight of Si, 31 to 34 % by weight of N, and 6.5 to 7.5% by weight of H. An example of the perhydropolysilazane structure is one as described below.

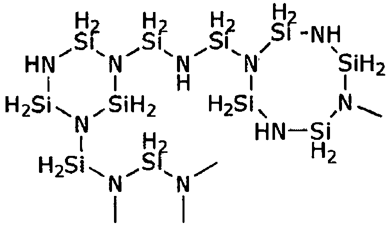

The inorganic polysilazane can be synthesized by the methods described above. The inorganic polysilazane is not particularly limited so long as it can be dissolved in a solvent. In general, the number average molecular weight (polystyrene conversion) is preferably from 500 to 5,000, more preferably from 500 to 3,000, further more preferably from 600 to 2,000.

### (II) Organic Polymer

The organic polymer used in the present invention may be arbitrarily selected from an organic polysilazane, an organic polysiloxazane and an organic polyureasilazane, so long as the effects of the present invention are not impaired. These are polymers in which nitrogen atoms in the polymer are bonded to at least two silicon atoms and an organic group is bonded to any Si atom in the polymer.

In the present invention, the organic polysilazane is one wherein an organic group is bonded to any Si atom of a polymer which has at least one linear, branched or cyclic main chain including at least one Si-N bond; the organic polysiloxazane is one wherein an organic group is bonded to any Si atom of a polymer which has at least one main chain including both an Si-N bond and an Si-O bond; and the organic polyureasilazane is one wherein an organic group is bonded to any Si atom of a polymer which has at least one linear, branched or cyclic main chain including at least one Si-N bond and at least one carbonyl group bonded to each of two nitrogen atoms.

Examples of the organic group bonded to the Si atom in the polymer include an alkyl group, an alkenyl group, a cycloalkyl group, an aryl group, an alkylsilyl group, an alkylamino group, an alkoxy group, a group represented by the following general formula (I), and the like. C₁-C₄ alkyl groups are preferable as the alkyl group, C₂-C₃ alkenyl groups are preferable as the alkenyl group, C₆-C₈ cycloalkyl groups are preferable as the cycloalkyl group, C₆-C₈ aryl groups are preferable as the aryl group, C₁-C₆ alkylsilyl groups are preferable as the alkylsilyl group, C₁-C₆ alkylamino groups are preferable as the alkylamino group, and C₁-C₆ alkoxy groups are preferable as the alkoxy group.

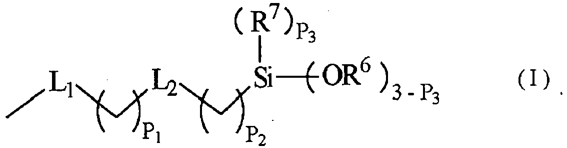

In the formula, L₁ bonds to Si of the organic polymer; L₁ and L₂ are each independently -CH₂-, -NR⁵- in which R⁵ is a hydrogen atom or a C₁-C₄ hydrocarbon group, -O-, -S-, and -OC(=O)-(ester bond) in which the oxygen atom bonds to Si, provided that L₂ may be absent; R⁶ and R⁷ are each independently a hydrogen atom, an alkyl group, an alkenyl group, a cycloalkyl group, an aryl group; P₁ and P₂ are each independently an integer of 0 to 4; and P₃ is an integer of 0 to 3.

In R⁶ described above, there are preferably exemplified a C₁-C₁₀ alkyl group which is unsubstituted or substituted by a hydroxyl group, a C₁-C₆ alkoxy group, a C₂-C₃ alkenyl group, a silyl group or a groups: -N (R⁸)₂ in which R⁸ is a group independently selected from a group consisting of a hydrogen atom, a C₁-C₆ alkyl group and a C₂-C₃ alkenyl group as the alkyl group; a C₁-C₁₀ alkenyl group which is unsubstituted or substituted by a hydroxyl group, a C₁-C₆ alkoxy group, a silyl group, or a group: -N(R⁸)₂ as the alkenyl group; and a monocyclic or bicyclic aryl group which is unsubstituted or substituted by a hydroxyl group, a C₁-C₆ alkyl group, a C₂-C₃ alkenyl group, a C₁-C₆ alkoxy group, a silyl group or a group -N(R⁸)₂ as the aryl group.

Preferable examples of the R⁷ group include a hydrogen atom, a hydroxyl group, and the saturated or unsaturated alkyl group, alkenyl group and aryl group described in R⁶.

The particularly preferable groups as the group represented by the general formula (I) described above are groups selected from Table 1 below.

**Table 1**

| L₁ | P₁ | L₂ | P₂ | R⁶ | R⁷ | P₃ |
|---|---|---|---|---|---|---|
| -NH- | 1 | -CH₂- | 1 | -CH₂CH₃ | - | 0 |
| -NH- | 1 | -CH₂- | 1 | -CH₃ | - | 0 |
| -NCH₂- | 1 | -CH₂- | 1 | -CH₂CH₃ | - | 0 |
| -NCH₂- | 1 | -CH₂- | 1 | -CH₃ | - | 0 |
| -NH- | 2 | -NH- | 3 | -CH₂CH₃ | - | 0 |
| -NH- | 2 | -NH- | 3 | -CH₃ | - | 0 |
| -OC(=O)- | 1 | -CH₂- | 1 | -CH₃ | - | 0 |
| -S- | 0 | -CH₂- | 0 | -CH₂CH₃ | - | 0 |
| -O- | 1 | 0 | 1 | -CH₂CH₃ | - | 0 |

The group represented by the formula (I) described above is substituted as the side chain of a polymer by reacting the polymer described later, which has been previously prepared, with a reagent having a reactive amine or hydroxyl functional group.

Examples of the reagent include 1-triethoxysilylacetic acid, 3-trimethoxysilylpropionic acid, 3-ethoxysilylpropionic acid, triethoxysilylmethane thiol, trimethoxysilylmethane thiol, 3-triethoxysilylpropane thiol, 2-trimethoxysilyl ethanol, 2-triethoxysilyl ethanol, 3-triethoxysilyl propanol, acethoxymethyltriethoxysilane, acethoxymethyltrimethoxysilane, acethoxypropyltrimethoxysilane, N-(3-acryloxy-2-hydroxypropyl)-3-aminopropyltriethoxysilane, (3-acryloxypropyl)-dimethylmethoxysilane, (3-acryloxypropyl)-methyldimethoxysilane, (3-acryloxypropyl)-trimethoxysilane, 3-(N-allylamino)propyltrimethoxysilane, 4-aminobutyltriethoxysilane, N-(2-aminoethyl)-3-aminoisobutylmethyldimethoxysilane, (aminoethylaminomethyl)phenethyltrimethoxysilane, N-(2-aminoethyl)-3-aminopropylmethyldimethoxysilane, N-(2-aminoethyl)-3-aminopropyltrimethoxysilane, N-(6-aminohexyl)aminopropyltrimethoxysilane, 3-(m-aminophenoxy)propyltrimethoxysilane, m-aminophenyltrimethoxysilane, p-aminophenyltrimethoxysilane, 3-(3-aminopropoxy)-3,3-dimethyl-1-propenyl-trimethoxysilane, 3-aminopropyldimethylethoxysilane, 3-aminopropylmethyldiethoxysilane, 3-aminopropyltriethoxysilane, 3-aminopropyltrimethoxysilane, 3-aminopropyltris(methoxyethoxyethoxy)silane, benzoyloxypropyltrimethoxysilane, bis-(2-hydroxyethyl)-3-aminopropyltriethoxysilane, hydroxymethyltriethoxysilane, (methacryloxymethyl)dimethylethoxysilane, methacryloxymethyltriethoxysilane, methacryloxymethyltrimethoxysilane, methacryloxypropyldimethylethoxysilane, methacryloxypropyltriethoxysilane, methacryloxypropyltris(methoxyethoxy)silane, N-methylaminopropylmethyldimethoxysilane, N-methylaminopropyltrimethoxysilane, N-phenylaminopropyltrimethoxysilane, and (3-trimethoxysilylpropyl)diethylenetriamine.

Of these, acethoxymethyltriethoxysilane, acethoxymethyltrimethoxysilane, acethoxypropyltrimethoxysilane, N-(2-aminoethyl)-3-aminopropyltrimethoxysilane, 3-(3-aminopropoxy)-3,3-dimethyl-l-propenyltrimethoxysilane, 3-aminopropyltriethoxysilane, 3-aminopropyltrimethoxysilane, and (3-trimethoxysilylpropyl)diethylenetriamine are preferred.

The most preferable are members selected from the group consisting of N-(2-aminoethyl)-3-aminopropyltrimethoxysilane, 3-aminopropyltriethoxysilane, 3-aminopropyltrimethoxysilane, and (3-trimethoxysilylpropyl)diethylenetriamine. Commercially available products thereof may be used.

These organic polymers are produced, for example, by a method wherein monomers having an organic group are polymerized as described in JP 07-018080 A or a method wherein hydrogen atoms of a polymer which has previously prepared are substituted by organic groups as described in JP 4236937 B. The silazane polymer can be prepared, for example, by a method described in JP 4236937 B, US Patent No. 4,482,669 or US Patent No. 4,689,252; the siloxazane polymer can be prepared, for example, by a method described in US Patent No. 5, 405, 655 or US Patent No. 5, 919, 572; and the ureasilazane polymer can be prepared, for example, by a method described in US Patent No. 5, 021, 533 or US Patent No. 4,929,704. Commercially available products thereof may be used.

Of the organic polymers described above, the organic polysilazane is preferable because a solvent which can be used for the inorganic polysilazane can be used. Preferable examples of the organic polysilazane include polysilazanes represented by the following formula (II): 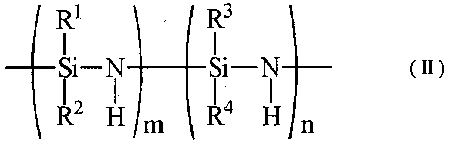 wherein R¹ is a group represented by the formula (I) described above and R², R³, and R⁴ are each independently a hydrogen atom, an alkyl group, an alkenyl group, a cycloalkyl group, an aryl group, an alkylsilyl group, an alkylamino group or an alkoxy group.

In the formula, m and n each is a number showing a molar ratio of structural units of the organic polysilazane represented by the formula (II) and when m + n is 100, m : n is 50 : 50 to 1 : 99, preferably m : n is 33 : 67 to 1 : 99, more preferably m : n is 15 : 85 to 2 : 98.

As R², R³ and R⁴, C₁-C₄ alkyl groups, C₂-C₃ alkenyl groups, C₆-C₈ cycloalkyl groups, C₆-C₈ aryl groups, C₁-C₆ alkylsilyl groups, C₁-C₆ alkylamino groups and C₁-C₆ alkoxy groups are preferable.

The organic polymer is not particularly limited so long as it can be dissolved in a solvent. In general, the number average molecular weight (polystyrene conversion) is preferably from 500 to 5,000, more preferably from 500 to 3,000, further more preferably from 600 to 2,000.

In the composition of the present invention, the inorganic polysilazane and the organic polymer are used in a weight ratio of from 40 : 60 to 17 : 83, more preferably from 33 : 67 to 20 : 80. When the content ratio of the inorganic polysilazane is more than 40 % by weight or less than 17 % by weight, it is difficult to reduce the refractive index of the film formed. This can be considered because if the content ratio is within the range described above, the compatibility between the inorganic polysilazane and the organic polymer becomes poor by evaporation of the solvent after the composition is applied. As a result, in a step of deposition and film formation on a substrate, each component becomes to separate out ununiformly during the film formation and thus a fine uneven structure having differences in level, which are suddenly changed in deepness, is formed on a surface of the film and air layers are formed on the surface part of the film. The resulting film has different optical properties between the surface part and the inside part of the film and exhibits optical properties like a multilayer film, although it is a single layer film. The unevenness on the film surface is gradually reduced and the film becomes smooth as the weight ratio deviates from the range described above, and thus the refractive index as a whole film is close to the refractive index of a material of the inorganic polysilazane or the organic polymer.

The low refractive index film of the present invention is obtained by a transformation of the inorganic polysilazane and the organic polymer to silica and organic siloxane, respectively. A catalyst for enhancing the transformation, therefore, may be added to the composition, if necessary.

Examples of the catalyst include N-heterocyclic compounds, amine compounds, and products obtained by bringing a salt of at least one metal selected from the group consisting of transition elements into contact with a basic organic compound.

Specific examples of the N-heterocyclic compound may include, in addition to piperidine, piperadine, pyrrolidine, imidazolidine, pyrazolidine, pyrazoline, pyrroline, pyrazine, indole, imidazole, triazine, and the like, bridged-ring heterocyclic compounds such as 1,4-diazabicyclo[2.2.2]octane and 7-azabicyclo[2.2.1]heptane, ring assembly heterocyclic compounds such as 1,3-di-4-piperizyl propane, 4,4'-trimethylenebis(1-methylpiperidine), and 2,2-dipyridylamine. Particularly preferred examples of N-heterocyclic compounds include 1,3-di-4-piperizyl propane, 4,4'-trimethylenebis(1-methylpiperidine), diazabicyclo-[2.2.2]octane and cis-2,6-dimethyl piperadine. When the N-heterocyclic compound is added as the catalyst, it is contained preferably in a content of 0.01 to 50 % by weight based on the total weight of the inorganic polysilazane and the organic polymer, more preferably 0.1 to 10 % by weight.

Examples of the amine compound include compounds represented by the formula (A): 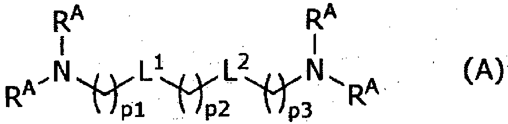 wherein R^{A}s are each independently a hydrogen atom or a C₁-C₄ hydrocarbon group, in which two R^{A}s bonded to one nitrogen are not a hydrogen atom at the same time; L¹ and L² are each independently -CH₂-, -NR^{A1}- in which R^{A1} is a hydrogen atom or a C₁-C₄ hydrocarbon group, or -O-; p1 andp3 are each independently an integer of 0 to 4; and p2 is an integer of 1 to 4, or compounds represented by the formula (B): 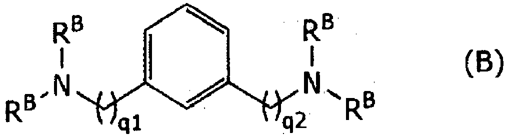 wherein R^{B}s are each independently a hydrogen atom or a C₁-C₄ hydrocarbon group and q1 and q2 are each independently an integer of 1 to 4.

These amine compounds are amine compounds having two or more N atoms in one molecule, in which a distance between N atoms is about 5 C-C bonds or longer. If the amine compound has more than 2 nitrogen atoms, any distance between these arbitrary two atoms has only to satisfy the condition described above. It is desirable that a short chain hydrocarbon group is bonded to the nitrogen atoms and it is more preferable that the number of the hydrocarbon groups is large. The number of N-H bonds, accordingly, is desirably small. However, the amine compound represented by the formula (B) can attain the effects of the present invention even if two hydrogen atoms are bonded to the terminal nitrogen atom.

Of such amine compounds, compounds represented by the following formula are particularly preferred.

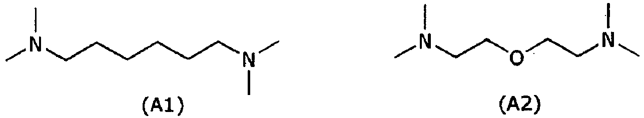

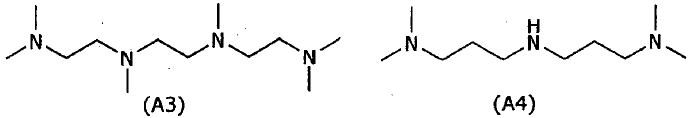

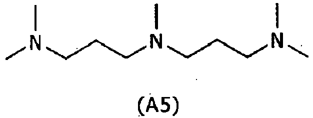

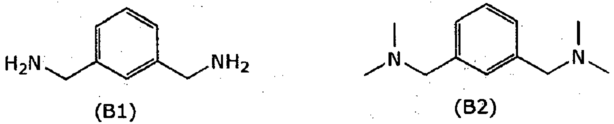

These amine compounds may be used as a mixture of two or more kinds, if necessary. When the amine compound is added as a catalyst, it is included preferably in a content of 50 % by weight or less, more preferably 10 % by weight or less, based on the total weight of the inorganic polysilazane and the organic polymer.

The aforementioned product obtained by bringing a salt of at least one metal selected from the group consisting of transition elements into contact with a basic organic compound means a product obtained by bringing a salt of at least one metal selected from the group consisting of transition elements into contact with a basic organic compound, before mixing with the inorganic polysilazane and the solution of the organic polymer. Specific examples of the transition element include La, Ce, Ti, Zr, V, Cr, W, Mn, Fe, Co, Ni, Pd, Cu, Ag, Zn, Al, In, Sn, Bi, and Pt. The salts of these metals include halides such as chloride, organic acid salts such as acetylacetonate, inorganic acid salts such as nitrate and sulfate, and hydroxides. Specific examples of suitable metal salts include, for example, LaCl₃, CeCl₃, TiCl4, ZrCl₄, VCl₄, CrCl₆, WCl₆, MnCl₂, FeCl₃, CoCl₃, NiCl₂, PdCl₂, CuCl₂, AgCl, ZnCl₂, AlCl₃, InCl₃, SnCl₄, SnCl₂, BiCl₃, PtCl₂, La(CH₃COO)₃, Ce(CH₃COO)₃, Cr(CH₃COO)₂, Mn(CH₃COO)₂, Fe(CH₃COO)₂, Co(CH₃COO)₂, Ni(CH₃COO)₂ Pd (CH₃COO)₂, Pd (C₂H₅COO)₂, Cu(CH₃COO)₂, Ag(CH₃COO), Zn(CH₃COO)₂, In(CH₃COO)₃, Sn(CH₃COO)₄, Sn(CH₃COO)₂, Pb(CH₃COO)₂, La(CH₃COCHCOCH₃)₃, Ce(CH₃COCHCOCH₃)₃, Zr(CH₃COCHCOCH₃)₄, V(CH₃COCHCOCH₃)₄, Cr(CH₃COCHCOCH₃)₃, Co(CH₃COCHCOCH₃)₂, Co(CH₃COCHCOCH₃)₃, Ni(CH₃COCHCOCH₃)₂, Pd(CH₃COCHCOCH₃)₂, Ag(CH₃COCHCOCH₃), Zn(CH₃COCHCOCH₃)₂, and Al (CH₃COCHCOCH₃)₃.

The basic organic compound, which is brought into contact with the metal salt described above, may include primary, secondary or tertiary amines, pyridines, and other stronglybasic organic compounds. The basic organic compound may be gaseous or liquid form when it is brought into contact with the metal salt.

Specific examples of the primary, secondary or tertiary amines include methyl amine, dimethyl amine, trimethyl amine, ethyl amine, diethyl amine, triethyl amine, propyl amine, dipropyl amine, tripropyl amine, butyl amine, dibutyl amine, tributyl amine, pentyl amine, dipentyl amine, tripentyl amine, hexyl amine, dihexyl amine, trihexyl amine, heptyl amine, diheptyl amine, triheptylamine, octyl amine, dioctyl amine, trioctyl amine, nonyl amine, dinonyl amine, decyl amine, dodecyl amine, phenyl amine, and the like. Specific examples of the pyridines include pyridine, picoline, lutidine, pyrimidine, pyridazine, and the like. Specific examples of other strongly basic organic compounds include 1,8-diazabicyclo[5.4.0]-7-undecene (DBU), 1,5-diazabicyclo[4.3.0]-5-nonene (DBN), and the like. Particularly preferable basic compounds in the present invention are primary amines, secondary amines, DBU and DBN.

When this catalyst is used, first, the metal salt is brought into contact with the basic organic compound. With respect to this contact ratio, the basic organic compound may be brought into contact with the metal salt in an amount enough to obtain desired effects. In general, the amount of the basic organic compound may be from 0.01 to 50 moles per mole of the metal salt, preferably 1 to 10 moles. If the amount of the basic organic compound brought into contact with one mole of the metal salt is less than 0.01 mole, the inorganic polysilazane and the organic polymer are quickly reacted with the metal salt to generate a large amount of big solid particles when mixed with the inorganic polysilazane and the organic polymer solution in the later step. On the other hand, when the contact amount of the basic organic compound is more than 50 moles, the stability of the inorganic polysilazane and the organic polymer, which are mixed in the later step, are deteriorated. It can be considered that the metal salt and the basic organic compound are reacted by this contact to form a complex.

When the product obtained by bringing the salt of at least one metal selected from the group consisting of transition elements into contact with the basic organic compound is added as a catalyst, the inorganic polysilazane, the organic polymer, and the metal salt are mixed in a weight ratio of the metal salt/(the inorganic polysilazane and the organic polymer) of generally 0.0001 to 0.5, preferably 0.001 to 0.2. When the amount of the metal salt mixed is more than this amount, the molecular weights of the inorganic polysilazane and the organic polymer are excessively increased, thus resulting in occurrence of gelation. On the other hand, when it is less than this amount, sufficient effects cannot be attained. The mixing is preferably performed in an inert atmosphere such as a nitrogen gas or argon gas atmosphere, but it is possible to perform the mixing in an oxidizing atmosphere such as in air.

### (Other additives)

The composition according to the present invention may include other additive components if necessary. Such a component may include, for example, a viscosity modifier, a crosslinking accelerator, and the like. When applied to a semi-conductor device, phosphorous compounds such as tris(trimethylsilyl)phosphate may be contained in the composition for obtaining a gettering effect of sodium.

### (Solvent)

The composition of the present invention may contain a solvent. The solvent is not particularly limited so long as the components, that is, the inorganic polysilazane, the organic polymer, the catalyst, and the additives can be dissolved therein. Preferable examples of the solvent include specifically the following solvents.

(a) Aromatic compounds such as benzene, toluene, xylene, ethyl benzene, diethyl benzene, trimethyl benzene, and triethyl benzene;
(b) saturated hydrocarbon compounds such as n-pentane, i-pentane, n-hexane, i-hexane, n-heptane, i-heptane, n-octane, i-octane, n-nonane, i-nonane, n-decane, and i-decene;
(c) alicyclic hydrocarbon compounds such as ethyl cyclohexane, methyl cyclohexane, cyclohexane, cyclohexene, p-menthane, decahydronaphthalene, dipentene, limonene, and α-pinene;
(d) ethers such as dipropyl ether, dibutyl ether, diethyl ether, methyl tert-butyl ether (hereinafter referred to as "MTBE"), and anisole; and
(e) ketones such as methyl isobutyl ketone (hereinafter referred to as "MIBK"), and the like.

Of these, (b) saturated hydrocarbon compounds, (c) alicyclic hydrocarbon compounds, (d) ethers, and (e) ketones are more preferable.

These solvents may be used as a mixture obtained by mixing two or more kinds thereof properly for controlling the evaporation speed of the solvent, reducing the harmfulness to human bodies, and controlling the solubility of each component.

Commercially available solvents may be used as such a solvent. For example, PEGASOL AN 45, PEGASOL 3040, EXXOL D 30, EXXOL D 40, EXXOL D 80, SOLVESSO 100, SOLVESSO 150, ISOPAR H, ISOPAR L (trade names; manufactured by Exxon Mobil Corporation) ; New Solvent A (a trade name; manufactured by JX Nippon Oil & Energy Corporation) ; Shell Sol MC 311, Shell Sol MC 811, Sol Eight Delux, New Shell Bright Sol (trade names; manufactured by Shell Chemicals Japan Ltd.) are commercially available and they may also be used.

It is preferable to use solvents having a low volatility from the view point of the safety. Specifically, it is more preferable to use solvents, as the solvents described above, having a low volatility as follows:
(b1) n-pentane, i-pentane, n-hexane, i-hexane, n-heptane, i-heptane, n-octane, i-octane, n-nonane, i-nonane, n-decane, or i-decane;
(c1) ethyl cyclohexane, methyl cyclohexane, cyclohexane, cyclohexene, p-menthane, or dipentene;
(d1) dipropyl ether, dibutyl ether, or MTBE; and (e1) MIBK.

Of these solvents, dibutyl ether is particularly preferable because a fine uneven structure is formed on the film surface after applying, and it is possible to use the solvent described above within a range where the solubility and the effects of the present invention are not impaired.

### (Method for Forming Low Refractive Index Film)

The low refractive index film according to the present invention is formed by applying the composition described above on a substrate and transforming the composition by heating or the like, if necessary.

The materials used for a surface of the substrate are not particularly limited and preferable examples thereof include transparent substrates such as glass and plastics. In addition, the substrate maybe opaque substrates such as a silicon substrate. The substrate may be in a shape of a plate, a film or a block, and the surface thereof may be flat or curbed. Any glass which has been conventionally known may be used as the glass material. Any plastic material which has been conventionally known may also be used. Examples thereof may include polyester resins such as polyethylene terephthalate, polybutylene terephthalate, polyethylene naphthalate, polyethylene terephthalate-isophthalate copolymers, terephthalic acid-cyclohexane dimethanol-ethylene glycol copolymers, and co-extruded films of polyethylene terephthalate/polyethylene naphthalate; polyamide resins such as nylon 6, nylon 66, and nylon610; polyolefin resins such as polyethylene, polypropylene, and polymethyl pentene; vinyl resins such as polyvinyl chloride; acrylic resins such as polyacrylate, polymethacrylate, and polymethyl methacrylate; imide resins such as polyimide, polyamideimide, and polyether imide; engineering resins such as polyacrylate, polysulfone, polyether sulfone, polyphenylene ether, polyphenylene sulfide (PPS), polyaramide, polyether ketone, polyether nitrile, polyether ether ketone, and polyether sulfite; polycarbonate, styrene resins such as polystyrene, high impact polystyrene, AS resins, and ABS resins; cellulose films such as cellophane, cellulose diacetate, cellulose triacetate, cellulose diacetate, and cellulose acetate butyrate, and the like. Another functional layer such as a hard coating layer may be formed on the substrate.

As a method for applying the composition on a surface of the substrate, there are raised conventionally known methods, for example, any method of a spin-coating method, a dipping method, a spraying method, a roller coating method, a transfer method, a slit-coating method, and printing methods such as a gravure printingmethod. Adrying step of the coated filmmay be provided separately, if desired. The coated film may be made to an intended thickness by applying the composition once or two or more times, if necessary.

The film coated on the surface of the substrate may be allowed to stand at an ordinary temperature in an atmosphere including steam, oxygen gas or mixed gas thereof, i.e. an oxidizing atmosphere, thereby transforming the composition; or may be pre-baked after application of the composition if necessary, followed by baking a coated film with heating and then being allowed to stand at an ordinary temperature as described above or being further baked with heated steam after the aforementioned baking to transform the composition. The pre-baking may be performed, for example, on a hot plate at a temperature of 40 to 80°C for about 5 to 15 minutes. The baking with heating described above is performed by baking at a low temperature of, for example, about 120°C to 200°C for about 5 minutes to about 60 minutes and then allowing the film to stand in the oxidizing atmosphere described above. After the baking, further baking may be performed at a high temperature of, for example, about 250 to about 450°C for about 15 minutes to about 120 minutes. The baking using heated steam may be performed using steam having a temperature of about 100°C to about 350°C for about 30 minutes to about 120 minutes.

### (Antireflective Film)

A low refractive index film can be formed using the composition for forming a low refractive index of the present invention. As described above, it can be considered that the film formed using the composition of the present invention has a fine uneven structure having differences in level formed on the surface of the film after the transformation of the composition, and in spite of a single layer, different optical properties of the surface part of the film and the inside of the film appear by the formation of the air layer due to the uneven structure and the single layered film shows optical properties like a multilayer film. For that reason, in the case where the low refractive index film of the present invention is used as an antireflective film of a single layer, if the thickness of the film is too thin, the optical properties like the multilayer film cannot be shown. On the contrary, if the thickness of the film is too thick, a ratio of the uneven layer occupying the film is decreased. The thickness of the film is, therefore, preferably from 100 to 500 nm, more preferably from 150 to 300 nm. In addition, the uneven layer has preferably a thickness of about 50 to 150 nm.

When the low refractive index film of the present invention is used as an upper layer of the antireflective film having the multilayer film structure, the high refractive index layer may be a known layer having a refractive index of about 1.44 to 2.00. As the known high refractive index layer, there are exemplified a film formed from an inorganic polysilazane, a film formed from at least one compound selected from high refractive index fine particles such as ZnO, TiO₂, Y₂O₃, ZrO₂, Al₂O₃, ITO, Sb₂O₅, CeO₂, SnO₂, and In₂O₃, a film in which high refractive index fine particles are dispersed in an inorganic polysilazane, and the like. The film thickness can be appropriately designed to obtain desired optical properties. Although the film thickness is not necessarily limited to the following ranges, it is preferable that the low refractive index film has a thickness of 100 to 500 nm and the high refractive index film has a thickness of 50 to 500 nm, and it is more preferable that the low refractive index film has a thickness of 150 to 300 nm and the high refractive index film has a thickness of 100 to 300 nm.

The thickness of the film and the refractive index (633 nm) are measured by using an ellipsometer. The film formed by using the composition of the present invention shows a refractive index of 1.30 to 1.40 which is less than a refractive index of 1.45 obtained after the transformation of the inorganic polysilazane alone or a refractive index of 1.40 obtained after the transformation of the organic polysilazane alone. The film is, accordingly, useful as an antireflective film for a display used in cell phones, computers, televisions and the like, an optical component used in cameras, copying machines, facsimile machines, laser beam printers and the like, touch panels, windowpanes for display or residential use, glasses, and the like.

### EXAMPLES

Hereinafter, the present invention will be more specifically explained with reference to Examples and Comparative Examples but the present invention is not limited to these Examples and Comparative Examples. In addition, the following apparatuses were used in the measurement.

GPC: RID-10A manufactured by Shimadzu Corporation
Spin Coater: 1H-360 S manufactured by Mikasa Co., Ltd. Film Thickness Gauges: VUV 302 Ellipsometer manufactured by J. A. Woollam Japan Co., Inc.

### <Synthesis Example>

First, Synthesis Examples of the inorganic polysilazane and the organic polysilazane in the present invention are shown below.

### <Synthesis Example 1: Synthesis of Inorganic Polysilazane>

A gas-blowing tube, a mechanical stirrer, and a Dewar condenser were attached to a one-liter four-neck flask. After the inside of the reactor was substituted by dry nitrogen gas from which oxygen gas was removed, 1,500 ml of dry pyridine degassed was put into the four-neck flask and cooled with ice. Next, 100 g of dichlorosilane was added thereto to generate a white solid adduct (SiH₂Cl₂·2C₅H₅N). The reaction mixture was cooled with ice and 70 g of ammonia was blown into the mixture under stirring. Subsequently, dry nitrogen gas was blown into a liquid layer of the reaction mixture for 30 minutes to remove excessive ammonia.

The resulting product was filtered under reduced pressure in a dry nitrogen gas atmosphere using a Buchner funnel to give 1,200 ml of a filtrate. Pyridine was distilled away from the filtrate using an evaporator to give 40 g of perhydropolysilazane. A number average molecular weight of the resulting perhydropolysilazane was measured by GPC (developing solution: CDCl₃) and was 800 in terms of polystyrene standard. The IR (infrared absorption) spectra were measure and it was confirmed that the perhydropolysilazane obtained has absorptions at a wavelength (cm⁻¹) of about 3,350 and 1,200 based on N-H, at a wavelength of 2, 170 based on Si-H, and at a wavelength of 1, 020 to 820 based on Si-N-Si.

### <Synthesis Example 2: Synthesis of Organic Polysilazane>

Polysilazane was synthesized by co-ammonolysis of a mixture of 500 g of methyldichlorosilane and 250 g of dimethyldichlorosilane with liquid ammonia. To 250 g of the resulting polysilazane was added 34.1 g of 3-aminopropyltriethoxysilane at 23°C and the mixture was stirred for one hour using a magnetic stirrer and stirrer chips. Subsequently, it was allowed to stand in an atmosphere having a temperature of 23°C for 12 hours and then the temperature thereof was raised gradually to 78°C on a hot plate under stirring. After the temperature of the hot plate reached 78°C, the mixture was stirred for further 2 hours and then the hot plate was turned off. Dry nitrogen gas was sent into the mixture and the mixture was stirred by bubbling until the temperature thereof was decreased to about 23°C. An organic polysilazane of the general formula (II) wherein R² to R⁴ each is a methyl group or hydrogen, m : n = 4 : 96, and R¹ is a group of the general formula (I) in which L₁ = -NH-, L₂ = -CH₂-, P₁ = P₂ = 1, P₃ = 0, and R₆ = -CH₂CH₃ was obtained. A number average molecular weight of the resulting organic polysilazane was measured by GPC (developing solution: CDCl₃) and was 850 in terms of polystyrene standard.

In Examples and Comparative Examples described below, inorganic polysilazane solutions A1 and A2, and an organic polysilazane solution B1 were prepared by the following methods. Furthermore, transformations of the films were performed by "Transformation of Film" (1) to (4) described below.

### <Preparation of Inorganic Polysilazane Solution>

Using the inorganic polysilazane synthesized in Synthesis Example 1, the following solutions were prepared.
(A1): Into a 100-ml glass beaker were introduced 16 g of the perhydropolysilazane obtained in Synthesis Example 1 and 63.2 g of dibutyl ether and then 0.8 g (5.0 % by weight to the perhydropolysilazane) of tetramethylhexane diamine was added to the resulting polysilazane solution under stirring with a stirrer to prepare a solution containing about 20 % by weight of the inorganic polysilazane in dibutyl ether.
(A2): Into a 100-ml glass beaker were introduced 16 g of the perhydropolysilazane obtained in Synthesis Example 1 and 64 g of dibutyl ether to prepare a solution containing 20 % by weight of the inorganic polysilazane in dibutyl ether.

### <Preparation of Organic Polysilazane Solution>

Using the organic polysilazane synthesized in Synthesis Example 2 described above, the following solution was prepared.
(B1): Into a 100-ml glass beaker were introduced 16 g of the organic polysilazane obtained in Synthesis Example 2 and 64 g of dibutyl ether to prepare a solution containing 20 % by weight of the organic polysilazane in dibutyl ether.

### <Transformation of Film>

(1) After the film was pre-baked on a hot plate at 80°C for 5 minutes, it was further baked at 200°C for 30 minutes and was allowed to stand at 23°C under a 60 RH% atmosphere for 3 days.
(2) After the film was pre-baked on a hot plate at 80°C for 5 minutes, it was further baked at 200°C for 30 minutes, followed by furthermore baking at 100°C for further one hour with heated steam.
(3) After the film was pre-baked on a hot plate at 80°C for 5 minutes, it was further baked at 200°C for 30 minutes, followed by furthermore baking at 400°C for further 30 minutes on a hot plate.
(4) The film was allowed to stand at 23°C in a 60 RH% atmosphere for 3 days.

### <Example 1>

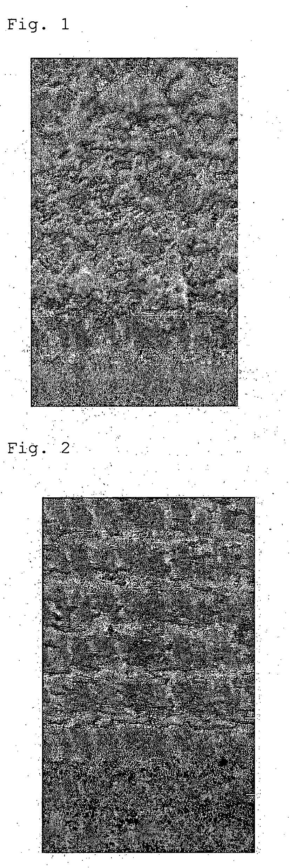

To a 100-ml glass beaker were put 5.0 g of the inorganic polysilazane solution (A1) and 15.0 g of the organic polysilazane solution (B1) and then 13.3 g of dibutyl ether was added thereto. Dry nitrogen gas was sent into the solution and the solution was stirred by the bubbling for 3 minutes to prepare a coating solution containing 12 % by weight of the inorganic and the organic polysilazanes in which the amount of the inorganic and the organic polysilazanes is a total amount and the inorganic polysilazane : the organic polysilazane is 1 : 3. The resulting solution was applied on a 4-inch silicon wafer having a thickness of 0.5 mm with a spin coater (at 500 rpm for 5 seconds and then at 1,000 rpm for 20 seconds). After that, the film was subjected to Transformation (1) and then a film thickness and a refractive index at 633 nm of the film were measured using an ellipsometer manufactured by Woollam Co. As a result, the film thickness was 230 nm and the refractive index was 1.33. It was confirmed that the film surface has a rough shape having unevenness and an air layer by the SEM observation of the cross-section of the film. A SEM photograph of the cross-section of the film is shown in Fig. 1.

### <Example 2>

A film was formed in the same manner as in Example 1 except that a translation of the film was performed by Transformation of Film (2). The film thickness was 220 nm and the refractive index was 1.31.

### <Example 3>

A film was formed in the same manner as in Example 1 except that a translation of the film was performed by Transformation of Film (3). The film thickness was 230 nm and the refractive index was 1.30.

### <Example 4>

A film was formed in the same manner as in Example 1 except that a translation of the film was performed by Transformation of Film (4). The film thickness was 230 nm and the refractive index was 1.35.

### <Example 5>

A film was formed in the same manner as in Example 1 except that 4 g of the inorganic polysilazane solution (A1), 16 g of the organic polysilazane solution (B1), and 10.8 g of dibutyl ether were used. The film thickness was 250 nm and the refractive index was 1.35.

### <Example 6>

A film was formed in the same manner as in Example 1 except that 6 g of the inorganic polysilazane solution (A1), 12 g of the organic polysilazane solution (B1), and 14.7 g of dibutyl ether were used. The film thickness was 230 nm and the refractive index was 1.35.

### <Example 7>

A film was formed in the same manner as in Example 1 except that 3 g of the inorganic polysilazane solution (A1), 15 g of the organic polysilazane solution (B1), and 4.5 g of dibutyl ether were used. The film thickness was 240 nm and the refractive index was 1.39.

### <Example 8>

A film was formed in the same manner as in Example 1 except that 3 g of the inorganic polysilazane solution (A1), 15 g of the organic polysilazane solution (B1), and 4.5 g of dibutyl ether were used. The film thickness was 240 nm and the refractive index was 1.35.

### <Example 9>

A film was formed in the same manner as in Example 1 except that 6 g of the inorganic polysilazane solution (A1), 9 g of the organic polysilazane solution (B1), and 12.3 g of dibutyl ether were used. The film thickness was 220 nm and the refractive index was 1.39.

### <Example 10>

A film was formed in the same manner as in Example 2 except that 6 g of the inorganic polysilazane solution (A1), 9 g of the organic polysilazane solution (B1), and 12.3 g of dibutyl ether were used. The film thickness was 220 nm and the refractive index was 1.36.

### <Example 11>

A film was formed in the same manner as in Example 1 except that 8.6 g of dibutyl ether were used. The film thickness was 290 nm and the refractive index was 1.34.

### <Example 12>

A film was formed in the same manner as in Example 1 except that 24.4 g of dibutyl ether were used. The film thickness was 160 nm and the refractive index was 1.37.

### <Example 13>

A film was formed in the same manner as in Example 1 except that 46.7 g of dibutyl ether were used. The film thickness was 110 nm and the refractive index was 1.39.

### <Example 14>

A low refractive film was formed in the same manner as in Example 1 except that dibutyl ether was not used. The film thickness was 470 nm and the refractive index was 1.39.

### <Example 15>

A low refractive film was formed in the same manner as in Example 3 except that an inorganic polysilazane solution (A2) was used instead of the inorganic polysilazane solution (A1). The film thickness was 200 nm and the refractive index was 1.36.

### <Comparative Example 1>

A film was formed in the same manner as in Example 1 except that 7 g of the inorganic polysilazane solution (A1), 7 g of the organic polysilazane solution (B1), and 14 g of dibutyl ether were used. The film thickness was 200 nm and the refractive index was 1.43. A SEM observation of the cross-section of the film showed that the film surface had a comparatively smooth shape. A SEM photograph of the cross-section of the film was shown in Fig. 2.

### <Comparative Example 2>

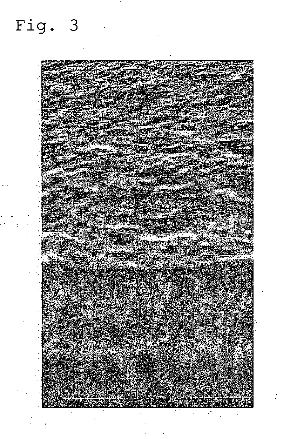

A film was formed in the same manner as in Example 1 except that 3 g of the inorganic polysilazane solution (A1), 27 g of the organic polysilazane solution (B1), and 5.3 g of dibutyl ether were used. The film thickness was 240 nm and the refractive index was 1.45. A SEM observation of the cross-section of the film showed that the film surface had a comparatively smooth shape. A SEM photograph of the cross-section of the film is shown in Fig. 3.

### <Comparative Example 3>

A film was formed in the same manner as in Example 1 except that 10 g of the inorganic polysilazane solution (A1), 0 g of the organic polysilazane solution (B1), and 10 g of dibutyl ether were used. The film thickness was 250 nm and the refractive index was 1.47.

### <Comparative Example 4>

A film was formed in the same manner as in Example 2 except that 10 g of the inorganic polysilazane solution (A1), 0 g of the organic polysilazane solution (B1), and 10 g of dibutyl ether were used. The film thickness was 250 nm and the refractive index was 1.45.

### <Comparative Example 5>

A film was formed in the same manner as in Example 3 except that 10 g of the inorganic polysilazane solution (A1), 0 g of the organic polysilazane solution (B1), and 10 g of dibutyl ether were used. The film thickness was 230 nm and the refractive index was 1.45.

### <Comparative Example 6>

A film was formed in the same manner as in Example 1 except that 0 g of the inorganic polysilazane solution (A1), 12 g of the organic polysilazane solution (B1), and 3 g of dibutyl ether were used. The film thickness was 260 nm and the refractive index was 1.44.

### <Comparative Example 7>

A film was formed in the same manner as in Example 2 except that 0 g of the inorganic polysilazane solution (A1), 12 g of the organic polysilazane solution (B1), and 3 g of dibutyl ether were used. The film thickness was 260 nm and the refractive index was 1.44.

### <Comparative Example 8>

A film was formed in the same manner as in Example 3 except that 0 g of the inorganic polysilazane solution (A1), 12 g of the organic polysilazane solution (B1), and 3 g of dibutyl ether were used. The film thickness was 250 nm and the refractive index was 1.44.

The compositions for forming a low refractive index film of Examples 1 to 15, the films formed using these compositions of Examples, the compositions for forming a low refractive index film of Comparative Examples 1 to 8, and films formed using these compositions of Comparative Examples are summarized in Table 2 below.

**Table 2**

| | Inorganic polysilazane | | Organic polysilazane | | Weight % of polymer | Baking condition | Film thickness (nm) | Refractive index (at 633 nm) |
|---|---|---|---|---|---|---|---|---|
| | kinds | ratio | kinds | ratio | | | | |
| Example 1 | A1 | 25 | B1 | 75 | 12 | 1 | 230 | 1.33 |
| Example 2 | A1 | 25 | B1 | 75 | 12 | 2 | 220 | 1.31 |
| Example 3 | A1 | 25 | B1 | 75 | 12 | 3 | 230 | 1.30 |
| Example 4 | A1 | 25 | B1 | 75 | 12 | 4 | 230 | 1.35 |
| Example 5 | A1 | 20 | B1 | 80 | 13 | 1 | 250 | 1.35 |
| Example 6 | A1 | 33 | B1 | 67 | 11 | 1 | 230 | 1.35 |
| Example 7 | A1 | 17 | B1 | 83 | 16 | 1 | 240 | 1.39 |
| Example 8 | A1 | 17 | B1 | 83 | 16 | 3 | 240 | 1.35 |
| Example 9 | A1 | 40 | B1 | 60 | 11 | 1 | 220 | 1.39 |
| Example 10 | A1 | 40 | B1 | 60 | 11 | 2 | 220 | 1.36 |
| Example 11 | A1 | 25 | B1 | 75 | 14 | 1 | 290 | 1.34 |
| Example 12 | A1 | 25 | B1 | 75 | 9 | 1 | 160 | 1.37 |
| Example 13 | A1 | 25 | B1 | 75 | 6 | 1 | 110 | 1.39 |
| Example 14 | A1 | 25 | B1 | 75 | 20 | 1 | 470 | 1.39 |
| Example 15 | A2 | 25 | B1 | 75 | 12 | 3 | 200 | 1.36 |
| Comparative Example 1 | A1 | 50 | B1 | 50 | 10 | 1 | 200 | 1.43 |
| Comparative Example 2 | A1 | 10 | B1 | 90 | 17 | 1 | 240 | 1.45 |
| Comparative Example 3 | A1 | 100 | | | 10 | 1 | 250 | 1.47 |
| Comparative Example 4 | A1 | 100 | | | 10 | 2 | 250 | 1.45 |
| Comparative Example 5 | A1 | 100 | | | 10 | 3 | 230 | 1.45 |
| Comparative Example 6 | | | B1 | 100 | 16 | 1 | 260 | 1.44 |
| Comparative Example 7 | | | B1 | 100 | 16 | 2 | 260 | 1.45 |
| Comparative Example 8 | | | B1 | 100 | 16 | 3 | 250 | 1.44 |

## Claims

1. The use of a composition comprising (A) an inorganic polysilazane and (B) at least one organic polymer selected from a silazane-containing organic polymer, a siloxazane-containing organic polymer, and an ureasilazane-containing organic polymer, wherein the ratio of (A) : (B) is from 40 : 60 to 17 : 83 by weight for forming a low refractive index filmhaving a refractive index of 1.30 to 1.40.

2. The use according to claim 1, wherein the organic polymer has at least one organic group selected from an alkyl group, an alkenyl group, a cycloalkyl group, an aryl group, an alkylsilyl group, an alkylamino group, an alkoxy group, and a group represented by the following formula (I): 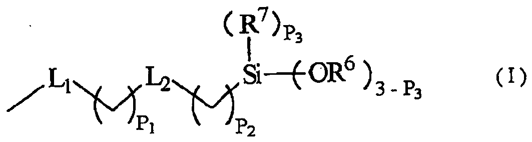 wherein L₁ bonds to Si of the organic polymer; L₁ and L₂ are each independently -CH₂-, -NR₅- in which R⁵ is a hydrogen atom or a C₁ - C₄ hydrocarbon group, -O-, -S-, -OC(=O)- in which an oxygen atom bonds to Si, provided that L₂ may be absent; R⁶ and R⁷ are each independently a hydrogen atom, an alkyl group, an alkenyl group, a cycloalkyl group, an aryl group; P₁ and P₂ are each independently an integer of 0 to 4; and P₃ is an integer of 0 to 3.

3. The use according to claim 2, wherein the silazane-containing organic polymer is a silazane-containing organic polymer represented by the formula (II): 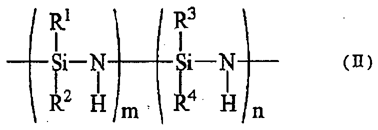 wherein R¹ is a group represented by the formula (I) described above; R², R³, and R⁴ are each independently a hydrogen atom, an alkyl group, an alkenyl group, a cycloalkyl group, an aryl group, an alkylsilyl group, an alkylamino group or an alkoxy group; and m and n show a molar ratio of the structure and m : n is from 50 : 50 to 1 : 99.

4. The use according to any one of claims 1 to 3, wherein the composition further comprises a solvent.

5. The use according to any one of claims 1 to 4, wherein the composition further comprises a catalyst.

6. An antireflective film comprising a low refractive index filmformedby applying a composition for forming a low refractive index film according to claim 4 or 5 onto a substrate and transforming the composition for forming a low refractive index film.

## Patentansprüche

1. Verwendung einer Zusammensetzung enthaltend (A) ein anorganisches Polysilazan und (B) mindestens ein organisches Polymer ausgewählt aus einem Silazan-enthaltenden organischen Polymer, einem Siloxazan-enthaltenden organischen Polymer und einem Harnstoffsilazan-enthaltenden organischen Polymer, wobei das Gewichtsverhältnis von (A) : (B) 40 : 60 bis 17 : 83 beträgt, zur Bildung eines Films mit geringem Brechungsindex, der einen Brechungsindex von 1,30 bis 1,40 aufweist.

2. Verwendung gemäß Anspruch 1, wobei das organische Polymer mindestens eine organische Gruppe aufweist, die ausgewählt ist auseiner Alkylgruppe, einer Alkenylgruppe, einer Cycloalkylgruppe, einer Arylgruppe, einer Alkylsilylgruppe, einer Alkylaminogruppe, einer Alkoxygruppe und einer Gruppe dargestellt durch die folgende Formel (I): 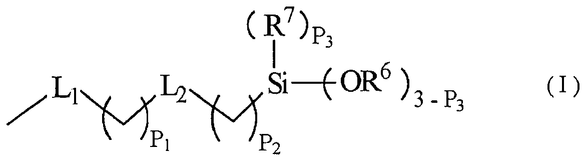 worin L₁ an Si des organischen Polymers bindet; L₁ und L₂ jeweils unabhängig -CH₂-, -NR⁵-, wobei R⁵ ein Wasserstoffatom oder eine C₁-C₄ Kohlenwasserstoffgruppe ist, -O-, -S-, -OC =) -, wobei ein Sauerstoffatom an Si bindet, sind, mit der Maßgabe, dass L₂ abwesend sein kann; R⁶ und R⁷ jeweils unabhängig ein Wasserstoffatom, eine Alkylgruppe, eine Alkenylgruppe, eine Cycloalkylgruppe, eine Arylgruppe sind; P₁ und P₂ jeweils unabhängig eine ganze Zahl von 0 bis 4 sind; und P₃ eine ganze Zahl von 0 bis 3 ist.

3. Verwendung gemäß Anspruch 2, wobei das Silazan-enthaltende organische Polymer ein Silazan-enthaltendes organisches Polymer dargestellt durch die Formel (II) ist: 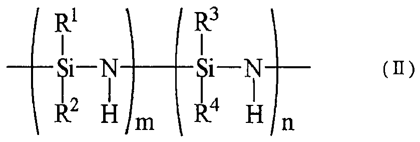 worin R¹ eine Gruppe dargestellt durch die oben beschriebene Formel (I) ist; R², R³ und R⁴ jeweils unabhängig ein Wasserstoffatom, eine Alkylgruppe, eine Alkenylgruppe, eine Cycloalkylgruppe, eine Arylgruppe, eine Alkylsilylgruppe, eine Alkylaminogruppe oder eine Alkoxygruppe sind; und m und n ein molares Verhältnis der Struktur anzeigen und m : n von 50 : 50 bis 1 : 99 beträgt.

4. Verwendung gemäß einem der Ansprüche 1 bis 3, wobei die Zusammensetzung zusätzlich ein Lösungsmittel enthält.

5. Verwendung gemäß einem der Ansprüche 1 bis 4, wobei die Zusammensetzung zusätzlich einen Katalysator enthält.

6. Antireflexionsfilm umfassend einen Film mit geringem Brechungsindex gebildet durch Aufbringen einer Zusammensetzung zur Bildung eines Films mit geringem Brechungsindex gemäß Anspruch 4 oder 5 auf ein Substrat und Transformieren der Zusammensetzung zur Bildung eines Film mit geringem Brechungsindex.

## Revendications

1. Utilisation d'une composition comprenant (A) un polysilazane inorganique et (B) au moins un polymère organique choisi parmi un polymère organique contenant un silazane, un polymère organique contenant un siloxazane, et un polymère organique contenant un uréesilazane, le rapport de (A) : (B) étant de 40 : 60 à 17 : 83 en poids, pour former un film à faible indice de réfraction ayant un indice de réfraction de 1,30 à 1,40.

2. Utilisation selon la revendication 1, dans laquelle le polymère organique a au moins un groupe organique choisi parmi un groupe alkyle, un groupe alcényle, un groupe cycloalkyle, un groupe aryle, un groupe alkylsilyle, un groupe alkylamino, un groupe alcoxy, et un groupe représenté par la formule (I) suivante : 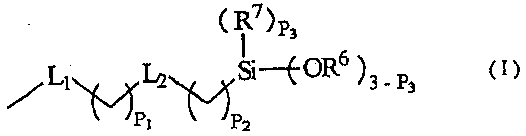 dans laquelle L₁ se lie à un Si du polymère organique ; L₁ et L₂ sont chacun indépendamment -CH₂-, -NR⁵- dans lequel R⁵ est un atome d'hydrogène ou un groupe hydrocarboné en C₁-C₄, -O-, -S-, -OC(=O)- dans lequel un atome d'oxygène se lie à un Si, à condition que L₂ puisse être absent ; R⁶ et R⁷ sont chacun indépendamment un atome d'hydrogène, un groupe alkyle, un groupe alcényle, un groupe cycloalkyle, un groupe aryle ; P₁ et P₂ sont chacun indépendamment un entier de 0 à 4 ; et P₃ est un entier de 0 à 3.

3. Utilisation selon la revendication 2, dans laquelle le polymère organique contenant un silazane est un polymère organique contenant un silazane représenté par la formule (II) : 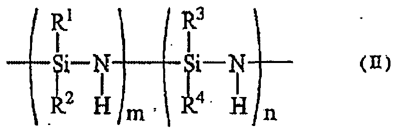 dans laquelle R¹ est un groupe représenté par la formule (I) décrite ci-dessus ; R², R³ et R⁴ sont chacun indépendamment un atome d'hydrogène, un groupe alkyle, un groupe alcényle, un groupe cycloalkyle, un groupe aryle, un groupe alkylsilyle, un groupe alkylamino ou un groupe alcoxy ; et m et n montrent un rapport molaire de la structure et m : n est de 50 : 50 à 1 : 99.

4. Utilisation selon l'une quelconque des revendications 1 à 3, dans laquelle la composition comprend en outre un solvant.

5. Utilisation selon l'une quelconque des revendications 1 à 4, dans laquelle la composition comprend en outre un catalyseur.

6. Film antireflet comprenant un film à faible indice de réfraction formé en appliquant une composition pour la formation d'un film à faible indice de réfraction selon la revendication 4 ou 5 sur un substrat et en transformant la composition pour la formation d'un film à faible indice de réfraction.
